# EUROPEAN PATENT APPLICATION

(11) **EP 1 416 387 A2**
(43) Date of publication of application: **06.05.2004**
(21) Application number: 02028882.5
(22) Date of filing: 23.12.2002
(51) Int. Cl.: G06F 12/08, G06F 17/30

(54) **System and method for maintaining transaction cache consistency in mobile computing environment**

(30) Priority: 31.10.2002 KR 2002067237
(71) Applicant: LG ELECTRONICS INC., Seoul (KR)
(72) Inventor: Lee, Sang Keun, Seoul (KR)
(74) Representative: TER MEER STEINMEISTER & PARTNER GbR

(57) **Abstract**

A system and method for maintaining a transaction cache consistency in a mobile computing environment are disclosed. An invalidation report message including an updated data and an update time stamp is periodically broadcast from a mobile server to a mobile client. Whenever the invalidation report message is received by the mobile client, an invalidation processing of a transaction cache is performed by using the received invalidation report message. A cache consistency maintaining processing is performed on the basis of the invalidation process result. The mobile client performs a read-only mobile transaction commit processing independently on the basis of the data of the consistency-maintained cache. Accordingly, a load to the mobile server is distributed to the mobile client.

## Description

### BACKGROUND OF THE INVENTION

### 1. Field of the Invention

The present invention relates to a mobile computing system and, more particularly, to a system and method for maintaining transaction cache consistency in a mobile computing environment.

### 2. Description of the Background Art

Thanks to the development in the radio communication technique and popularization of the mobile communication device, a mobile computing environment has been created in which users can be provided with various information while moving.

A transaction in the mobile computing environment is used in case where a blanket process such as an order made by a user through a mobile terminal or a bill issuing operation is required but a portion of a sub-operation is failed so that the overall operation should not be processed.

That is, the transaction is a process function used for the successfully executed operation as portions of sub-operations are all successful. Thus, one transaction is made up by one or more computation units.

The processing of transaction in the mobile computing environment is restricted by a mobility of a host, frequent disconnection, a limited bandwidth, a battery capacity, or the like. Therefore, in order to reduce the use of the bandwidth limited as much as possible in the mobile computing environment and improve a response time of a mobile transaction, a caching technique has been proposed in which a mobile host caches a frequently accessed data.

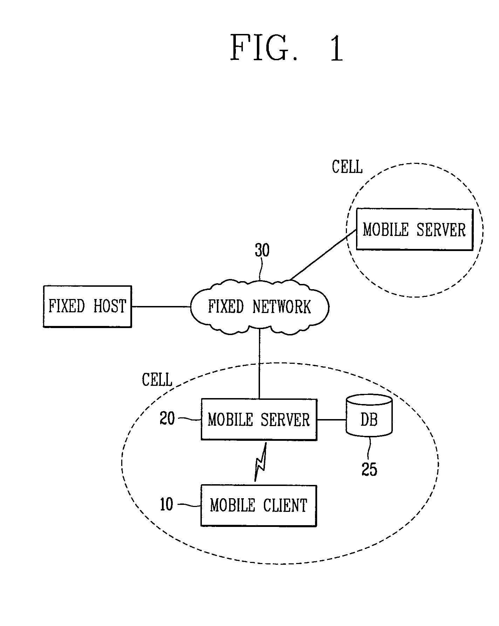

Figure 1 is an example of a general construction of a mobile computing network.

The mobile computing network roughly consists of a fixed host which is connected by wire to a fixed network (a wired network) and not movable; and a mobile host which is movable.

The fixed host having a radio communication interface and providing a service is called a mobile server 20, and a mobile hole performing a radio communication with the mobile server 20 is called a mobile client 10.

A zone to which one mobile server 20 can provide a service is called a cell, and mobile clients 10 located in the same cell communicate with the same mobile server 20 through a radio channel. The cell can be made by a cellular connection or by a wireless LAN (local area network).

In general, the mobile server 20 has a wide bandwidth and an abundant battery. Since the mobile server 20 makes a communication by using the wired network 30, a reliable communication can be performed.

Meanwhile, the mobile client 10 has a limited bandwidth and battery and makes a communication by using a wireless network, so that its reliability in communication is degraded.

The mobile client 10 can perform a transaction by using a cached data even while being moved or disconnected. The transaction submitted to the mobile client 10 is called a mobile transaction.

If the same data with the data cached in the cache of the mobile client 10 is updated in the mobile server 20, the mobile server 20 broadcast an invalidation report (IR) message informing that the cached data has been updated to the mobile client 10 in order to maintain the cache consistency of the mobile client 10.

However, since the mobile computing network has a limited bandwidth, frequent message exchanges between the mobile client 10 and the mobile server 20 cause a bottleneck phenomenon to the bandwidth.

Thus, it is preferred that the mobile server 20 reduces the communication as much as possible with the mobile client 10 and informs the mobile client 10 whether the data has been updated. Therefore, the mobile server 20 collects the information updated for a certain period of time and periodically broadcasts the invalidation report message to the mobile client 10.

At this time, the mobile client 10 does not know whether the data has been updated as occurred in the mobile server 20 until it receives the periodically broadcast invalidation report message.

A serializability of the mobile transaction signifies characteristics that the consequence obtained by simultaneously performing one or more transactions is the same as a sequentially (serially) executed consequence.

However, in the case that the cached data is updated in the mobile server 20, since the mobile client 10 does not know whether the data has been updated until it receives a broadcast on the invalidation report message, the cache consistency of the mobile client 10 is not guaranteed and the serializable performance of the mobile transaction is not also guaranteed.

In addition, in the conventional mobile computing environment, when the mobile client executes a read-only mobile transaction and requests commit of the executed read-only mobile transaction from the mobile server, the mobile server determines whether to commit or withdraw the read-only mobile transaction according to the commit request and informs the mobile client of the determined matter.

Then, the mobile client commits or withdraws the read-only mobile transaction according to the determined matter received from the mobile server. Therefore, in the conventional mobile computing environment, a large amount of transmission and reception message s required between the mobile server and the mobile client, which interferes an effective use of the limited bandwidth.

In addition, since the commit/withdrawal determining on the read-only mobile transaction executed in the mobile client is made by the mobile server, the response time is taken long.

Moreover, since the mobile server should even determine the commit/withdrawal of the mobile transaction executed in the mobile client, a much load is applied.

The above references are incorporated by reference herein where appropriate for appropriate teachings of additional or alternative details, features and/or technical background.

### SUMMARY OF THE INVENTION

Therefore, an object of the present invention is to provide a system and method for maintaining a transaction cache consistency in a mobile computing environment that are capable of effectively using a bandwidth between a mobile server and a mobile client and distributing a load of the mobile server to the mobile client.

Another object of the present invention is to provide an optimistic concurrency control with timestamp span (OCC-UTS²) protocol that is capable of easily maintaining a transaction cache consistency of a mobile client in a mobile computing environment.

Still another object of the present invention is to provide a system and method for maintaining a transaction cache consistency in a mobile computing environment in which a transaction cache consistency is maintained so that a mobile client can independently perform a commit process of a read-only mobile transaction.

Yet another object of the present invention is to provide a system and method for maintaining a transaction cache consistency in a mobile computing environment that are capable of distributing a load of a mobile server and capable of minimizing a transmission and reception message between the mobile server and the mobile client by allowing the mobile client to check a consistency of a transaction cache data on a time stamp and independently performing a transaction commit processing.

Another object of the present invention is to provide a system and method for maintaining a transaction cache consistency in a mobile computing environment that are capable of maintaining a consistency between several data by allowing a mobile server to assign the same updated time stamp to data one transaction has updated and by allowing a mobile client to withdraw all transactions which use invalidated data.

Another object of the present invention is to provide a system and method for maintaining a transaction cache consistency in a mobile computing environment that are capable of providing a fast transaction response time by performing a mobile transaction commit processing on the basis of a time stamp.

Another object of the present invention is to provide a system and method for maintaining a transaction cache consistency in a mobile computing environment that are capable of maintaining a consistency even on an immediately cached data by allowing a mobile client to check a consistency of a transaction cache data on the basis of a time stamp.

To achieve at least the above objects in whole or in parts, there is provided a system for maintaining a transaction cache consistency in a mobile computing environment comprising: a mobile server for periodically broadcasting an invalidation report message; and a mobile client for performing an invalidation processing on a transaction cache by using a time stamp of the invalidation report message, performing a processing to maintain a consistency of the transaction cache on the basis of the invalidation process result, and performing a commit processing of an executed read-only mobile transaction.

To achieve at least these advantages in whole or in parts, there is further provided a method for maintaining a transaction cache consistency of a mobile client in a mobile computing environment including the steps of: executing a read-only mobile transaction; performing an invalidation processing on the transaction cache by using a time stamp of an invalidation report message and checking a consistency of a data being read and computed whenever the invalidation report message is periodically reached; and commit-processing the executed read-only mobile transaction.

To achieve at least these advantages in whole or in parts, there is further provided a method for maintaining a transaction cache consistency in a mobile computing environment including: a step in which a mobile server periodically broadcasts an invalidation report to a mobile client; and a step in which the mobile client performs an execution step and a commit-processing step of a read-only mobile transaction by using an optimistic concurrency control with timestamp span (OCC-UTS²) protocol.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 illustrates the construction of a general mobile computing network;
Figure 2 illustrates the construction of software blocks of a mobile server and a mobile client in accordance with the present invention;
Figure 3 is a flow chart of a method for executing a read-only mobile transaction by the mobile client in accordance with the present invention;
Figures 4A and 4B are flow charts of method for invalidating a transaction cache of the mobile client and checking a consistency in accordance with the present invention; and
Figure 5 is a flow chart of a method for commit-processing the read-only mobile transaction by the mobile client in accordance with the present invention.

### DETAILED DESCRIPTION OF THE PREFERRED EMBODIMENTS

Since transactions can be simultaneously performed, a concurrency control is required to manage execution of a plurality of transactions that occur concurrently. An optimistic approach is one of general methods for controlling a concurrency, and is based on the assumption that most of database operations do not collide with each other. This method is preferred for a read-only transaction made up by operations of reading or inquiring a database.

In addition, since a message exchange required between a mobile client and a mobile server can be minimized, the present inventions adopts the optimistic concurrency control. Moreover, the present invention proposes an optimistic concurrency control with timestamp span (OCC-UTS²) protocol to facilitate checking of a transaction cache consistency and invalidation and allow the mobile client to independently perform a transaction commit-processing.

A preferred embodiment of the present invention will now be described with reference to the accompanying drawings.

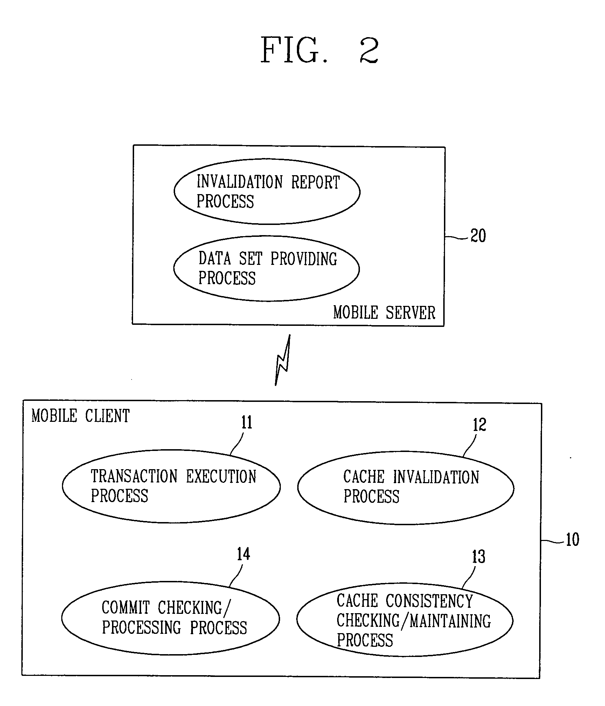

Figure 1 illustrates the construction of a general mobile computing network, and Figure 2 illustrates the construction of software blocks of a mobile server and a mobile client in accordance with the present invention.

As shown in Figure 2, a transaction cache consistency maintaining system includes: a mobile server 20 for periodically broadcasting an invalidation report; and a mobile client 10 for executing a read-only mobile transaction, checking invalidation and consistency of a cache upon receiving the invalidation report, and performing a commit-processing of the read-only mobile transaction independently.

The cache is a set of (data, an update time stamp or a cache time stamp of the data).

The mobile server 20 includes an invalidation report process 21 for periodically broadcasting an invalidation report (IR) message; and a data set providing process 22 for providing a data set upon receiving an instant caching request from the mobile client 10.

The IR message has a broadcast time stamp (tsᵢ) and includes several pairs of updated data and update time stamps. The broadcast time stamp (tsᵢ) indicates a time when the IR message is broadcast (tsᵢ = iL), wherein 'L' indicates a broadcast period. The update time stamp indicates a commit time stamp of the transaction which has the data last updated. The IR message is used to check a data invalidation and consistency of a transaction cache existing in the mobile client 10.

The data set includes a valid data and an update time stamp of the valid data.

The mobile client 10 includes a transaction execution process 11 for executing a read-only mobile transaction; a cache invalidation process 12 for checking an invalidation of a transaction cache by using the periodically received invalidation report message; a cache consistency checking/maintaining process 13 for withdrawing transactions which use a data invalidated in the invalidation checking as occur so as to maintain a transaction cache consistency; and a commit checking/processing process 14 for performing an immediate validation commit processing and a delay validation commit processing by using a cache time stamp owned by data to which the transaction executing process 11 has approached.

The immediate validation commit processing method is immediately performing a commit processing of the read-only transaction if all the data accessed by the transaction execution process 11 have the same cache time stamp.

The delay validation commit processing method is delaying commit/withdrawal determining of the read-only mobile transaction until the next IR message is reached, if all the data accessed by the transaction execution process 11 do not have the same cache time stamp. After the next IR message is reached, if none of data in the reading set is invalidated and deleted from the cache, the mobile client 10 can commit the read-only mobile transaction.

The reading set is a set of (a data undergoing a reading operation by the read-only mobile transaction, a cache time stamp of the data).

The operation of the transaction cache consistency maintaining system in the mobile computing environment constructed as described above will now be explained.

The mobile server 20 assigns the same update time stamp to corresponding data items when one transaction updates several data, which is a basis on which the mobile client 10 can commit the transaction stably and immediately after checking it when all the accessed data have the same update time stamp.

In addition, the mobile server 20 periodically broadcast the IR message through a radio communication interface in order to inform the mobile client 10 of the information on the updated data.

When the read-only mobile transaction is submitted, the mobile client 10 draws back the data cached in the transaction cache and executes the read-only mobile transaction. Simultaneously, at a required time point, that is, at the time when the IR message is reached, the mobile client 10 checks invalidation and consistency of the transaction cache on the basis of the reached IR message. And then, the mobile client 10 performs a commit-processing of the read-only mobile transaction independently.

First, the process of executing the read-only mobile transaction will now be described.

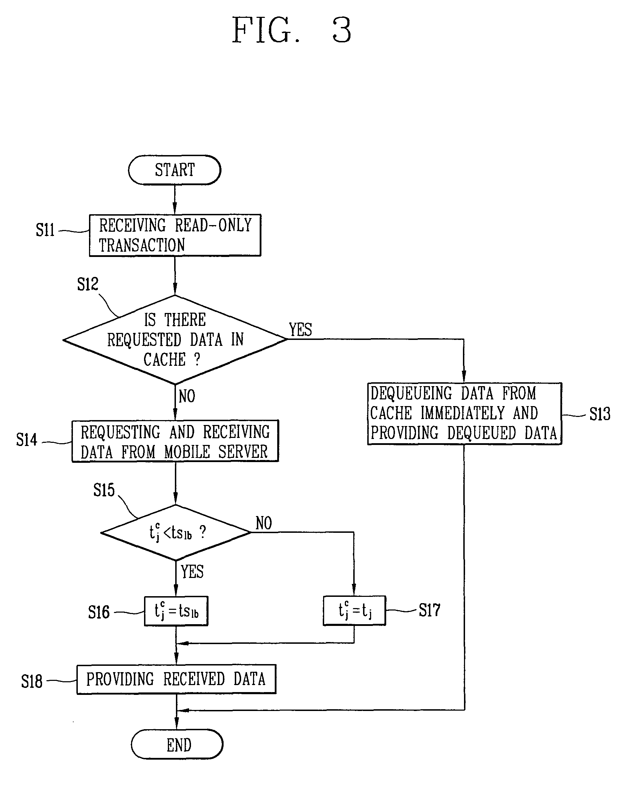

Figure 3 is a flow chart of a method for executing a read-only mobile transaction by the mobile client in accordance with the present invention.

As shown in Figure 3, when the read-only mobile transaction is submitted to the mobile client 10 (step S11), the transaction execution process 11 checks whether the data requested by the read-only mobile transaction exists in the cache (the transaction cache) (step S12).

If there is the requested data in the cache, the transaction execution process 11 withdraws immediately the requested data from the cache and provides it to the read-only mobile transaction (step S13).

If, however, the requested data does not exist in the cache, the transaction execution process 11 transmits the read-only mobile transaction to the mobile server 20 and requests the data. Then, the data set providing process 22 of the mobile server 20 transmits the corresponding data set to the mobile client 10. The corresponding data set includes the requested data (j) and an update time stamp of the data (tⱼ).

The mobile client 10 receives the data set from the mobile server 20 (step S14), loads the data of the received data set to the cache, and suitably changes a cache time stamp of the data (steps S15-S17).

Namely, the transaction execution process 11 of the mobile client 10 compares the update time stamp (tⱼ) of the data set and the last IR time stamp (that is, a broadcast time stamp of the last received IR : ts_{lb}) (step S15).

If the update time stamp (tⱼ) of the data set is smaller than the last IR time stamp (ts_{lb}), the transaction execution process 11 assigns a cache time stamp (t^{c}ⱼ) for the data loaded to the cache as the last IR time stamp (ts_{lb}) (step S16).

If, however, the update time stamp (tⱼ) of the data set is not smaller than the last IR time stamp (ts_{lb}), the transaction execution process 11 assigns the cache time stamp (t^{c}ⱼ) of the data as the update time stamp (tⱼ) (step S17).

In this manner, the mobile client receives a data from the mobile server 20, immediately caches it, changes the cache time stamp of the cached data to maintain the consistency of the transaction cache, and then provides the immediately cached data to the read-only mobile transaction (step S18).

While the mobile client 10 is processing the execution step of the read-only mobile transaction, if it receives the IR message which is periodically broadcast by the mobile server 20, the mobile client 10 performs the cache invalidation processing and the data consistency checking by using the IR message. Accordingly, upon periodically receiving the IR message, the mobile client 10 periodically performs the cache invalidation processing and the cache data consistency checking. The cache invalidation processing and the cache data consistency checking of the mobile client 10 are yet to be described.

When the read-only mobile transaction is executed, the mobile client 10 independently performs the commit processing of the read-only mobile transaction.

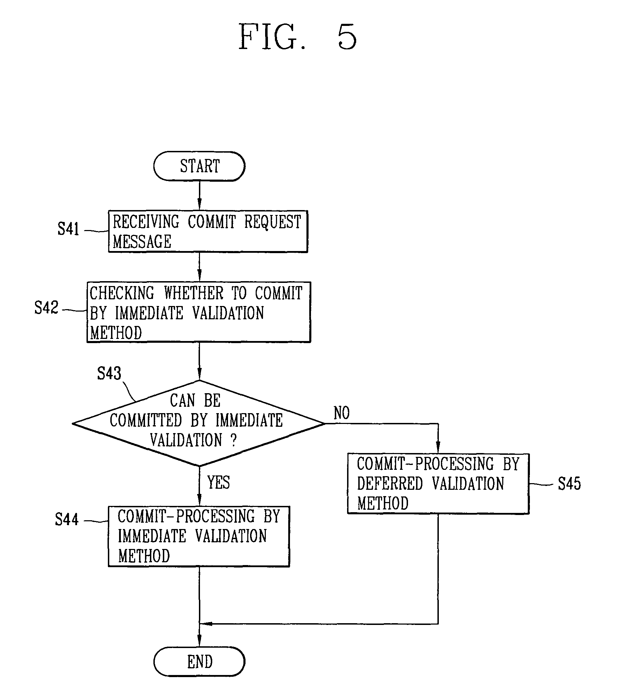

Figure 5 is a flow chart of a method for commit-processing the read-only mobile transaction by the mobile client in accordance with the present invention.

The transaction execution process 11 of the mobile client 10 executes the read-only mobile transaction and generates a commit request message.

When the commit checking/processing process 14 of the mobile client 10 receives the commit request message (step S41), it checks whether the read-only mobile transaction can be committed by the immediate validation method (step S42).

That is, the commit checking/processing process 14 checks whether the cache time stamps of all the data included in the reading set of the executed read-only mobile transaction have the same value (step S43).

If the cache time stamps of all the data included in the reading set have the same value, the commit checking/processing process 14 immediately commit the executed read-only mobile transaction (step S44).

If, however, the cache time stamps of all the data included in the reading set do not have the same value, the commit checking/processing process 14 delays determining of commit/withdrawal until the next IR message is reached (step S45). That is, the commit checking/processing process 14 puts a commit request message for requesting commit of the read-only mobile transaction into a commit queue. The commit request message includes an identity (ID) of the commit-requested read-only mobile transaction and a reading set of the transaction.

The operation of the cache invalidation processing and the cache data consistency checking of the mobile client 10 will now be described.

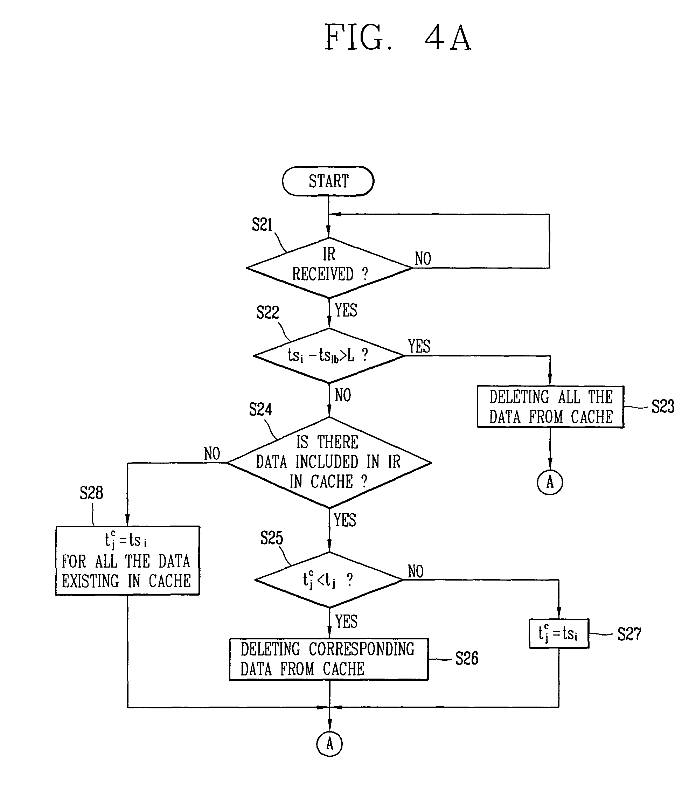

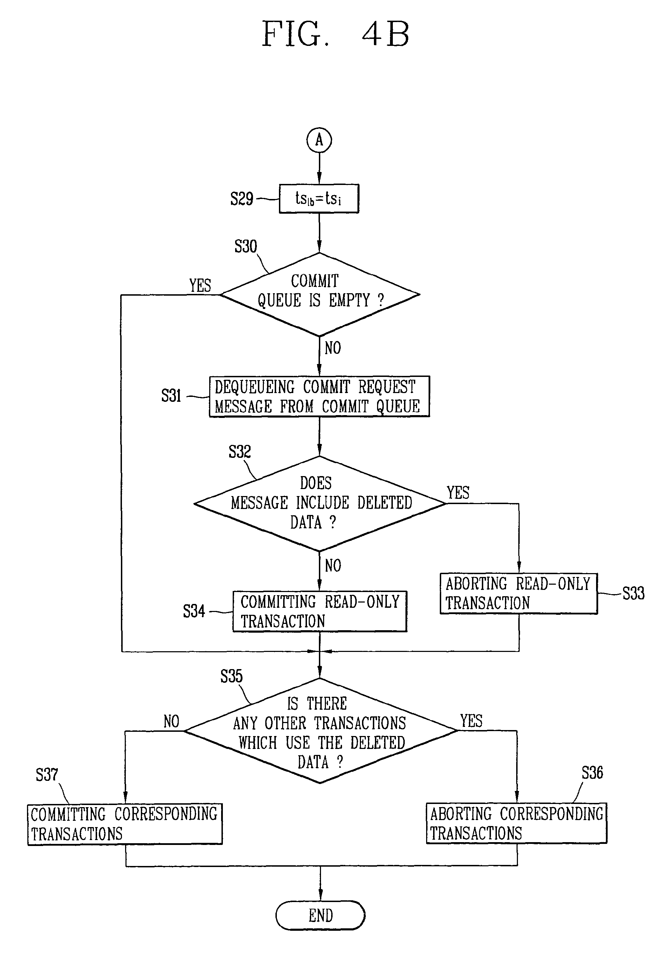

Figures 4A and 4B are flow charts of a method for invalidating a transaction cache of the mobile client and checking a consistency in accordance with the present invention.

Whenever the mobile client 10 receives the IR message which is periodically broadcast by the mobile server 20 (step S21), the cache invalidation process 12 of the mobile client 10 checks whether a difference between the broadcast time stamp (tsᵢ) of the reached IR message (IR(tsᵢ)) and the last IR time stamp ts_{lb} stored in the mobile client 10 is greater than 'L' (a broadcast period) (step S22).

If the difference between the broadcast time stamp (tsᵢ) is greater than 'L', that is, if the IR message has been received after a pre-set time lapse the cache invalidation process 12 deletes all the data stored in the cache (step S23).

If, however, the difference between the broadcast time stamp (tsᵢ) and Ts_{lb} is not greater than 'L", that is, if the cache invalidation process 12 receives the IR message timely, the cache invalidation process 12 checks whether there is the same data with the data contained in the IR message in the cache (step S24).

If there is no same data with the data contained in the IR message in the cache, the cache invalidation process 12 assigns the cache time stamps of all the data existing in the cache as a broadcast time stamp (step S28). In this manner, by updating the cache time stamp for the data which has not be invalidated, the mobile client can perform the commit process of the read-only mobile transaction independently.

If, however, there is the same with the data contained in the IR message in the cache, the cache invalidation process 12 checks whether the update time stamp (tⱼ) of the data contained in the IR message is greater than the cache time stamp (t^{c}ⱼ) of the corresponding data existing in the cache (step S25).

If the update time stamp (tⱼ) is greater than the cache time stamp (t^{c}ⱼ), the cache invalidation process 12 deletes the corresponding data from the cache to invalidate it (step S26).

If, however, the update time stamp (tⱼ) is not greater than the cache time stamp (t^{c}ⱼ), the cache invalidation process 12 assigns the cache time stamp (t^{c}ⱼ) as a broadcast time stamp (tsᵢ) of the IR message (step S27).

The cache invalidation process 12 assigns ts_{lb} as the broadcast time stamp (tsᵢ) (step S29).

And then, the commit checking/processing process 14 checks whether the commit queue is empty (step S30). If the commit queue is not empty, the commit checking/processing process 14 dequeues a commit request message from the commit queue (step S31).

If the dequeued commit request message contains a data which has been deleted from the cache by the cache invalidation process 12, the commit checking/processing process 14 withdraws the read-only mobile transaction contained in the commit request message (step S33).

If, however, the dequeued commit request message does not contain the deleted data, the commit checking/processing process 14 commits the read-only mobile transaction contained in the commit request message (step S34).

In this manner, the commit checking/processing process 14 receives the next IR message, a cache invalidation is performed with the IR message by the cache invalidation process 12, and then, a delay validation commit process is performed on the basis of the cache invalidation processing result.

After the delay validation commit processing is performed, the cache consistency checking/maintaining process 13 checks whether there is other transactions using a data which has been deleted from the cache by the cache invalidation process 12 (step S35).

If there is other transactions using the deleted data, the cache consistency checking/maintaining process 13 withdraws the corresponding transactions (step S36).

In this manner, whenever IR messages are reached, the mobile client 10 periodically performs the cache invalidation processing and the processing to maintain the consistency of the cache data.

As so far described, the system and method for maintaining transaction cache consistency in a mobile computing environment has the following advantages.

That is, first, by applying the optimistic concurrency control with update timestamp span (OCC-UTS²) protocol to the read-only mobile transaction, the serializable execution of the read-only mobile transaction is guaranteed, the consistency of the cache data of the mobile client can be maintained, and the mobile client can perform the commit processing of the read-only mobile transaction independently.

Second, since the mobile client checks the consistency of the transaction cache data on the basis of the time stamp and performs the transaction commit processing independently, the load of the mobile server can be distributed and the transmission and reception message between the mobile server and the mobile client can be minimized.

Third, in processing the read-only mobile transaction by the mobile client, the message transmission and reception for controlling concurrency between the mobile server and the mobile client are completely removed. Thus, the bandwidth for the radio interface can be effectively used.

Fourth, since the mobile server assigns the same update time stamp to the data one transaction has updated and the mobile client withdraws all the transactions which use invalidated data, a consistency between multiple data, not a consistency of a single data, can be maintained.

Fifth, since the mobile client performs the mobile transaction commit processing on the basis of the time stamp, a fast transaction response time can be provided.

Sixth, whenever the IR message is reached to the mobile client, the cache time stamp is updated by using the IR message even for a data of a cache which has not been invalidated. Thus, the cache consistency of the mobile client can be maintained.

Lastly, since the mobile server provides the time stamp together with the data, even if the mobile client immediately caches the data, the cache consistency can be maintained and a serializable execution of the transaction can be guaranteed.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A system for maintaining a transaction cache consistency in a mobile computing environment comprising:
a mobile server for periodically broadcasting an invalidation report message; and
a mobile client for performing an invalidation processing on a transaction cache, upon receipt of the invalidation report message, performing a processing to maintain a consistency of the transaction cache on the basis of the invalidation process result, and performing a commit-processing of an executed read-only mobile transaction.

2. The system of claim 1, wherein when one transaction updates a plurality of data, the mobile server assigns an identical value for an update time stamp of the plurality of data.

3. The system of claim 1, wherein the mobile server comprises:
an invalidation report process for periodically broadcasting the invalidation report message; and
a data set providing process for providing a data set to the mobile client upon receiving an immediate caching request from the mobile client.

4. The system of claim 1, wherein the invalidation report message comprises:
a broadcast time stamp for indicating a broadcast time;
an updated data; and
an update time stamp for indicating a commit time stamp of a transaction which has updated the data last.

5. The system of claim 1, wherein when the executed read-only mobile transaction is requested to commit, if all the data contained in a reading set of the executed read-only mobile transaction have an identical cache time stamp, the mobile client performs immediately the commit processing, while if all the data does not have the identical cache time stamp, the mobile client defers the commit processing until a next invalidation report message arrives at the mobile client.

6. The system of claim 1, wherein the mobile client comprises:
a transaction execution process for executing the read-only mobile transaction;
a cache invalidation process for performing an invalidation processing of the transaction cache by using the invalidation report message which is periodically received;
a cache consistency checking/maintaining process for maintaining a transaction cache consistency by aborting transactions which use a data invalidated in the invalidation checking; and
a commit checking/processing process for performing an immediate validation commit processing and a deferred validation commit processing by using a cache time stamp of data accessed by the transaction executing process.

7. A method for maintaining a transaction cache consistency of a mobile client in a mobile computing environment comprising the steps of:
executing a read-only mobile transaction;
performing an invalidation processing on the cache and performing a consistency maintaining processing of a reading-operated data whenever the invalidation report message is periodically reached; and
commit-performing the executed read-only mobile transaction.

8. The method of claim 7, wherein the invalidation report message is periodically broadcast by a mobile server and includes a broadcast time stamp for indicating a broadcast time, an updated data and an update time stamp for indicating a commit time stamp of a transaction which has updated the data last.

9. The method of claim 8, wherein when one transaction updates a plurality of data, the mobile server assigns the same value for an update time stamp of the plurality of data.

10. The method of claim 7, wherein the step of performing a cache invalidation comprises:
deleting all the data of a transaction cache if the invalidation report message is not received within a broadcast period;
comparing an update time stamp of a data and a cache time stamp if the same data with the data contained in the invalidation report message exists in a transaction cache, in case that the invalidation report message is received within the broadcast period;
deleting the data from the transaction cache and invalidating it, if the update time stamp is greater than the cache time stamp;
assigning the cache time stamp as a broadcast time stamp of the invalidation report message, if the update time stamp is not greater than the cache time stamp; and
assigning a cache time stamp of all the data of the transaction cache as a broadcast time stamp of the invalidation report message, if there is no same data with the data contained in the invalidation report message in the transaction cache.

11. The method of claim 7, wherein the step of performing a data consistency checking comprises: withdrawing transactions if they use a data invalidated in the transaction cache invalidation processing.

12. The method of claim 7, wherein the step of commit processing comprises:
checking whether all the data contained in a reading set of a read-only mobile transaction has the same cache time stamp, if the read-only mobile transaction is requested to commit after being executed;
immediately commit-processing the read-only mobile transaction, if all the data have the same cache time stamp; and
delaying the commit/withdrawal determining of the read-only mobile transaction until the next invalidation report message is received, if all the data does not have the same cache time stamp.

13. The method of claim 12, further comprising:
committing the read-only mobile transaction, if the read-only mobile transaction does not include a data invalidated from the transaction cache based on the next arrived invalidated report message; and
withdrawing the read-only mobile transaction if the read-only mobile transaction includes the invalidated data.

14. A method for maintaining a transaction cache consistency in a mobile computing environment comprising:
a step in which a mobile server periodically broadcasts an invalidation report to a mobile client; and
a step in which the mobile client performs an execution process and a commit process of a read-only mobile transaction by using an optimistic concurrency control with timestamp span (OCC-UTS²) protocol.

15. The method of claim 14, wherein the step of executing the read-only mobile transaction comprises:
checking whether there is a data requested by the read-only mobile transaction in the cache;
dequeueing the data immediately from the cache, if the requested data exists in the cache;
immediately caching the data from the mobile server if the requested data does not exist in the cache; and
selecting the later one of an update time stamp of the immediately cached data and the last invalidation report time stamp, and assigning the selected value as the cache time stamp of the immediately cached data.

16. The method of claim 14, wherein the step of committing the read-only mobile transaction comprises:
committing the read-only mobile transaction immediately, if all the data being read by the executed read-only mobile transaction have the same cache time stamp; and
delaying determining of commit/withdrawal of the read-only mobile transaction until the next invalidation report is received, if all the data being read do not have the same cache time stamp.

17. The method of claim 16, further comprising:
committing the read-only mobile transaction, if the read-only mobile transaction does not include a data invalidated based on the next invalidation report as received; and
withdrawing the read-only mobile transaction, if the read-only mobile transaction does not include the invalidated data.

18. The method of claim 14, further comprising: performing the cache invalidation and the consistency processing whenever the invalidation report is periodically received.
